# EUROPÄISCHE PATENTSCHRIFT

(11) **EP 1 331 854 B1**
(45) Veröffentlichungstag und Bekanntmachung des Hinweises auf die Patenterteilung: **20.12.2006**
(21) Anmeldenummer: 01992507.2
(22) Anmeldetag: 30.10.2001
(51) Int. Cl.: A23G 9/20, A23G 9/22, A23G 9/28, A23G 9/30

(54) **VORRICHTUNG UND VERFAHREN ZUR HESTELLUNG VON SPEISEEIS MIT AUFSCHLAG**
DEVICE AND METHOD FOR PRODUCING WHIPPED ICE CREAM
DISPOSITIF ET PROCEDE DE PREPARATION DE CREME GLACEE FOUETTEE

(30) Priorität: 06.11.2000 DE 10054891; 09.11.2000 DE 10055577; 15.02.2001 DE 10107143
(43) Veröffentlichungstag der Anmeldung: 06.08.2003
(73) Patentinhaber: NESTEC S.A., 1800 Vevey (CH)
(72) Erfinder: REINHARDT, Jochen, 29525 Uelzen (DE); SYMANZICK, Oliver, 52 525 Waldfeucht (DE)
(74) Vertreter: Rupp, Christian
(86) Internationale Anmeldenummer: PCT/EP2001/012539
(87) Internationale Veröffentlichungsnummer: WO 2002/035940

(56) Entgegenhaltungen:
- EP-A- 0 322 952
- EP-A- 0 502 360
- DE-U- 29 501 664
- GB-A- 1 399 755
- PATENT ABSTRACTS OF JAPAN vol. 1998, no. 01, 30. Januar 1998 (1998-01-30) & JP 09 224581 A (SANYO ELECTRIC CO LTD), 2. September 1997 (1997-09-02)

## Beschreibung

Die Erfindung betrifft eine Vorrichtung zur Herstellung von Speiseeis mit Aufschlag aus Mix sowie eine Verfahren zur Herstellung von Speiseeis mit Aufschlag aus Mix.

Speiseeis wird regelmäßig mit einem Aufschlag, beispielsweise in einem Bereich von 0 bis etwa 250 %, versehen, indem in eine Ausgangsmischung, dem sogenannten Speiseeismix oder Mix, unter Kühlung Luft eingeschlagen wird. Die Volumenzunahme von Speiseeis durch das Einschlagen von Luft, bezogen auf das Volumen des Mixes, wird als Aufschlag bezeichnet. Der Aufschlag wird in Prozent angegeben. Durch die eingeschlagene Luft erhält Speiseeis ein pastenartig cremiges Gefüge. Die Luft erhöht die Viskosität des Mixes. Beim Gefrieren und Schmelzen von Speiseeis verzögert die Luft den Wärmedurchgang.

Der Speiseeismix bzw. Mix umfaßt sämtliche für die Herstellung des jeweiligen Speiseeisproduktes erforderlichen Komponenten. Zusammensetzungen derartiger Mixe können beispielsweise dem Buch "Speiseeis", Timm, 1985, Verlag Paul Parey, Berlin und Hamburg, Deutschland, entnommen werden.

Herkömmlicherweise wird der Mix von einem Vorratsbehälter, beispielsweise einem Tanklager, einem sogenannten Freezer zugeführt. In dem Freezer wird der Mix unter Kühlung und Lufteintrag aufgeschlagen, d.h. mit einem Aufschlag versehen. Von dem Freezer wird das mit Aufschlag versehene Speiseeis der weiteren Verarbeitung zugeführt, d.h. beispielsweise unter Formgebung zu einem Stieleis weiterverarbeitet.

Bei Herstellung eines Speiseeisproduktes, das beispielsweise Speiseeis mit unterschiedlichen Geschmacksrichtungen, wie z.B. Vanille, Schokolade, Erdbeere, etc., enthält, werden diese jeweils getrennt in einem Freezer gekühlt und aufgeschlagen. Das jeweils aufgeschlagene Speiseeis wird nachfolgend beispielsweise in einem Stutzen zusammengeführt und gestrudelt.

Sofern es nun bei einer der Vorrichtungen zur Herstellung der mit Aufschlag versehenen Speiseeissorten der vorgenannten Geschmacksrichtungen zu einer Störung oder Unterbrechung des Herstellungsprozeßes kommt, wird der Vorschub des Mixes von dem Vorratsbehälter zu dem und durch den Freezer nicht abgestellt, um die stabilen Betriebsbedingungen der Vorrichtung nicht zu gefährden.

Ein Abstellen des Vorschubs des Mixes führt zu einem Vereisen des Freezers, da dem Freezer kein Mix mit höherer Temperatur zugeführt wird. Folglich kühlt der Freezer das in dem Freezer befindliche Speiseeis so weit herunter, daß der Freezer vollständig vereist ist.

Ein Abschalten der gesamten Vorrichtung führt zu einer Temperaturerhöhung des Freezers. Bei einem erneuten Anfahren der Vorrichtung muß diese so lange betrieben werden bis wieder stabile Betriebsbedingungen erreicht sind. Stabile Betriebsbedingungen sind durch einen kontinuierlichen Durchsatz von Mix durch den Freezer gekennzeichnet, bei dem das in dem Freezer erzeugte Speiseeis am Auslaß des Freezer eine definierte Temperatur, einen definierten Aufschlag und eine bestimmte Viskosität aufweist.

Bei einer Störung bzw. Unterbrechung in einem Teilbereich der Vorrichtung, die beispielsweise auch bei der nachfolgenden Weiterverarbeitung des hergestellten Speiseeises mit Aufschlag auftreten kann, wird die Vorrichtung mithin weiterbetrieben. Das aus dem Freezer austretende Speiseeis mit Aufschlag wird im Falle einer Störung abgetrennt, indem es in Behältern, die am Auslaß des Freezers angeordnet werden, als sogenanntes Rework aufgefangen wird. Sofern es sich bei dem Rework um sortenreines Speiseeis handelt, kann es, sofern es nicht zu einer bakteriologischen Kontamination des aufgefangenen Speiseeises gekommen ist, in geringen Mengen wieder dem Mix zugesetzt werden.

Da das Rework jedoch einen Aufschlag aufweist, kann es nicht in beliebigem Umfang dem Mix zugesetzt werden, da anderenfalls das Speiseeis am Auslaß des Freezers keinen definierten Aufschlag mehr aufweist. Um qualitativ hochwertige Speiseeisprodukte zu erhalten, wird somit Rework nur in geringen Mengen dem Mix zugesetzt.

Sofern das Rework ein Gemisch aus Speiseeis verschiedener Geschmacksrichtungen ist, kann dieses Gemisch nur in einem äußerst begrenzten Umfang wieder verwendet werden, da ein Zusetzen eines solchen Reworks zu einzelnen Speiseeissorten nicht annehmbar ist.

Mithin müssen große Mengen an Rework als Abfall entsorgt werden. Dies führt zum einen zu einem unerwünschten Verbrauch von teuren Rohstoffen, insbesondere bei Spezialeissorten wie z.B. Diabetikereis, und andererseits zu erhöhten Entsorgungskosten.

Aus ökonomischen und ökologischen Gründen ist es erwünscht, daß die Menge an nicht wiederverwertbarem Rework verringert wird.

Die EP-A-0322952 offenbart einen Apparat und ein Verfahren zur Herstellung von Eiskonfekt, wobei das Überzugsmaterial rezirkuliert wird.

Aufgabe der Erfindung ist es mithin, eine Vorrichtung und ein Verfahren bereitzustellen, bei dem die Menge an anfallendem, nicht wiederverwertbarem Rework verringert ist.

Die Aufgabe wird durch Bereitstellung einer Vorrichtung zur Herstellung von Speiseeis mit Aufschlag aus Mix, wobei die Vorrichtung eine Aufwärmeinrichtung, eine Entlüftungseinrichtung, einen Freezer und eine Ausgabeeinrichtung umfaßt, die über Zuführungen miteinander verbunden sind, wobei ein Mix enthaltender Vorratsbehälter über eine Zuführung mit der Aufwärmeinrichtung verbindbar ist und die zwischen Freezer und Ausgabeeinrichtung angeordnete Zuführung mit der zwischen Vorratsbehälter und Aufwärmeinrichtung angeordneten Zuführung unter Ausbildung eines Kreislaufs verbindbar ist, gelöst.

Bevorzugte Weiterbildungen der Vorrichtung sind in den Unteransprüchen 2 bis 13 angegeben.

Die Aufgabe wird weiterhin durch ein Verfahren zur Herstellung von Speiseeis mit Aufschlag aus Mix,
wobei der Mix
(a) von einem Vorratsbehälter einer Aufwärmeinrichtung zugeführt wird,
(b) von der Aufwärmeinrichtung einer Entlüftungseinrichtung zugeführt wird,
(c) von der Entlüftungseinrichtung einem Freezer zugeführt wird,
(d) in dem Freezer unter Kühlung und Lufteintrag in den Mix aufgeschlagen wird,
(e) das im Schritt (d) hergestellte Speiseeis mit Aufschlag einer Ausgabeeinrichtung zugeführt wird,
   wobei im Falle einer Störung oder Unterbrechung des Herstellungsverfahrens,
(f) die Zuführung von Mix aus dem Vorratsbehälter im Schritt (a) und die Ausgabe von Speiseeis mit Aufschlag über die Ausgabeeinrichtung gestoppt wird,
(g) das im Schritt (d) hergestellte Speiseeis mit Aufschlag der Aufwärmeinrichtung zugeführt wird,
(h) in der Aufwärmeinrichtung erwärmt wird, wobei eine erwärmte Speiseeismasse erzeugt wird,
(i) die im Schritt (h) erzeugte Speiseeismasse der Entlüftungseinrichtung zugeführt wird,
(j) die Speiseeismasse in der Entlüftungseinrichtung entlüftet wird,
(k) die entlüftete Speiseeismasse dem Freezer zugeführt wird,
(l) in dem Freezer unter Kühlung und Lufteintrag aufgeschlagen wird,
wobei das Speiseeis mit Aufschlag solange in den Schritten (f) bis (l) im Kreislauf geführt wird, bis die Störung oder Unterbrechung des Herstellungsverfahrens beendet ist.

Bevorzugte Weiterbildungen des Verfahrens sind in den Unteransprüchen 15 bis 22 angegeben.

Unter dem Begriff "Mix" wird im Sinne der Erfindung ein Speiseeismix verstanden, der die für das jeweils herzustellende Speiseeisprodukt erforderlichen Rohstoffe enthält. Der Mix muß lediglich mit Luft aufgeschlagen werden, um das gewünschte Speiseeis mit Aufschlag zu ergeben.

Unter dem Begriff "Freezer" wird im Sinne der Erfindung ein Kühleinrichtung verstanden, die auch eine Einrichtung zum Einbringen oder Einschlagen von Luft in den Mix umfaßt. Beispielsweise kann der Freezer nach Art eines Kratzwärmetauschers ausgebildet sein, bei dem die sich bildende Eiskristallgröße gesteuert werden kann. Selbstverständlich können die Kühleinrichtung und die Einrichtung zum Einschlagen von Luft auch räumlich bzw. apparativ voneinander getrennt sein. Der Begriff "Freezer" ist im Sinne der Erfindung so zu verstehen, daß beide Einrichtungen entweder apparativ zusammengefaßt oder voneinander getrennt vorliegen können. Bevorzugt ist im Sinne der Erfindung, daß die Kühlvorrichtung und Einrichtung zum Einschlagen von Luft apparativ zusammengefaßt sind.

Unter dem Begriff "Entlüften" wird im Sinne der Erfindung ein Entgasen des Speiseeises bzw. Entfernen des Aufschlags aus dem Speiseeis mit Aufschlag verstanden. Eine "Entlüftungseinrichtung" ist mithin im Sinne der Erfindung ein Einrichtung, in der das Entgasen des Speiseeises bzw. Entfernen des Aufschlags aus dem Speiseeis bewirkt wird.

Erfindungsgemäß kann anstelle von Luft auch ein inertes Gas, wie beispielsweise Stickstoff oder Kohlendioxid, zum Aufschlagen des Mixes verwendet werden.

Bei der erfindungsgemäßen Vorrichtung wird im Falle einer Störung oder Unterbrechung des Verfahrens zur Herstellung von Speiseeis mit Aufschlag das aus dem Freezer austretende Speiseeis mit Aufschlag, der bis zu etwa 250 %, bevorzugt etwa 50 % bis etwa 150 %, bevorzugter etwa 100 %, beträgt, über ein Verbindungselement, beispielsweise einen Dreiwegehahn oder ein Umschaltventil, in die zu der Aufwärmeinrichtung führenden Zuführung geleitet. Zeitnah bzw. zeitgleich wird der Vorschub von Mix aus dem Vorratsbehälter zu der Aufwärmvorrichtung gestoppt. Mithin wird das Verfahren zur Herstellung von Speiseeis mit Aufschlag bei einer Störung oder Unterbrechung im Umlauf bzw. Kreislauf geführt.

Bei Umschaltung der Vorrichtung auf Umlaufbetrieb wird die Aufwärmeinrichtung angeschaltet, um das aus dem Freezer geförderte Speiseeis mit Aufschlag zu erwärmen. Die Erwärmung dient der Erniedrigung der Viskosität, d.h. einer Verflüssigung des Speiseeises mit Aufschlag. Als Aufwärmeinrichtung wird bevorzugt ein Wärmetauscher, eine Mikrowellenheizung, eine Widerstandsheizung, eine Induktionsheizung und/oder eine Infrarotheizung verwendet. Bevorzugt ist der Wärmetauscher ein Gegenstromwärmetauscher.

Vorteilhaft ist es, wenn Wärmetauscher und Freezer energetisch miteinander gekoppelt sind. Die dem Mix im Freezer entzogene Energie kann dem Wärmetauscher über ein geeignetes Medium wie z.B. Wasser zugeführt werden.

Zur weiteren Unterscheidung wird das aus der Aufwärmeinrichtung austretende erwärmte Speiseeis als Speiseeismasse bezeichnet.

Diese Speiseeismasse wird nachfolgend einer Entlüftungseinrichtung zugeführt. Bevorzugt ist an die Entlüftungseinrichtung ein Unterdruck angelegt, um ein Entlüften bzw. Entgasen der Speiseeismasse zu beschleunigen. Um das Entlüften bzw. Entgasen der Speiseeismasse weiter zu verbessern, ist es bevorzugt, daß das die Speiseeismasse in der Entlüftungseinrichtung verteilt wird. Bevorzugt wird die Speiseeismasse in der Entlüftungsvorrichtung feinverteilt, da hierdurch eine große Oberfläche bei der Speiseeismasse erzeugt wird. Eine große Oberfläche bei der Speiseeismasse verbessert den Grad des Entlüftens bzw. Entgasens der Speiseeismasse deutlich.

Eine Feinverteilung von Speiseeismasse in dem Entlüfter kann beispielsweise bewirkt werden, indem die Speiseeismasse auf einen sich bewegenden Prallkörper geleitet wird. Eine einfache und wirksame Ausgestaltung eines solchen Prallkörpers ist eine rotierende Scheibe, die gegebenenfalls eine geeignete Oberflächenstruktur in Form von Erhebungen und Vertiefungen aufweisen kann. Die auf eine rotierende Scheibe gelangende Speiseeismasse wird gleichmäßig und fein in der Entlüftungseinrichtung verteilt.

Durch die vorgenannten Maßnahmen kann einerseits der Durchsatz in der erfindungsgemäßen Vorrichtung erhöht werden. Ein wesentlicher Aspekt ist weiterhin, daß die Entgasung bzw. Entlüftung der Speiseeismasse sehr effizient ist. Bevorzugt ist, daß der verbleibende Aufschlag in der Speiseeismasse nach Auslassen aus der Entlüftungseinrichtung maximal etwa 20 % beträgt. Weiter bevorzugt ist, daß der verbleibende Aufschlag maximal etwa 10 % beträgt. Äußerst bevorzugt beträgt der verbleibende Aufschlag etwa 5 % bis etwa 10 %, bevorzugter etwa 5 %.

Je geringer der verbleibende Aufschlag in der Speiseeismasse ist, um so geringer ist der Einfluß auf den Aufschlag, nach dem die Speiseeismasse erneut im Freezer aufgeschlagen ist. Mithin kann bei der erfindungsgemäßen Vorrichtung bzw. bei dem erfindungsgemäßen Verfahren ein definierter Aufschlag beim Austrag des Speiseeises aus dem Freezer gewährleistet werden.

Bei Untersuchungen hat sich herausgestellt, daß es bei der erfindungsgemäßen Vorrichtung zu keinen bakteriologischen Kontaminationen kommt. Dies ist zum einen darauf zurückzuführen, daß die Vorrichtung beispielsweise in einem Temperaturbereich von etwa -10°C bis +10°C, bevorzugter in einem Bereich von etwa -5°C bis etwa +5°C betrieben werden kann. Zum anderen ist die erfindungsgemäße Vorrichtung ein geschlossenes System, so daß das Auftreten einer bakteriologischen Kontamination vorteilhaft erschwert wird.

Es hat sich gezeigt, daß, falls es zu einer länger andauerenden Störung oder Unterbrechung kommen sollte, die erfindungsgemäße Vorrichtung bis zu fünf Stunden im Umlauf bzw. Kreislauf betrieben werden kann.

Wesentlicher Vorteil der erfindungsgemäßen Vorrichtung bzw. bei dem erfindungsgemäßen Verfahren ist, daß bei einem Betrieb der Vorrichtung sämtliche Zuführungen kontinuierlich durchströmt werden. Das heißt, nach einem Kreislauf- oder Umlaufbetrieb der erfindungsgemäßen Vorrichtung werden bei Umschaltung auf den Produktionsbetrieb sämtliche Zuführungen mit neuem Mix bzw. Speiseeis mit Aufschlag durchströmt. Es gibt mithin keine Zuführungen, die über einen längeren Zeitraum gefüllt mit Mix oder Speiseeis mit Aufschlag vorliegen und nicht durchströmt werden.

Bevorzugt ist die Ausgabeeinrichtung bzw. Abfülleinrichtung, wie zum Beispiel ein Stutzen oder Füller, in räumlicher Nähe des Umschaltventils, bevorzugt unmittelbar am Umschaltventil, angeordnet. Je kürzer die Zuführung zwischen Umschaltventil und Ausgabeeinrichtung ist, desto geringer ist die anfallende Menge an Rework.

Bei einem Umlaufbetrieb der erfindungsgemäßen Vorrichtung kann das aus dem Freezer austretende Speiseeis mit Aufschlag in der Aufwärmeinrichtung, z.B. einem Röhrenwärmetauscher, auf etwa +4°C bis +7°C erwärmt werden. Der Druck nach dem Austritt aus dem Röhrenwärmetauscher kann beispielsweise 1 bis 2 bar betragen. Diese erwärmte Speiseeismasse kann in die Entlüftungseinrichtung überführt werden. Der Druck in der Entlüftungseinrichtung kann dabei etwa 200 mbar betragen. Nach Auslaß aus der Entlüftungseinrichtung kann der verbleibende Aufschlag in der Speiseeismasse etwa 10 % betragen. Diese Speiseeismasse kann dann mit einer Temperatur von beispielsweise bis zu etwa +5°C und einem Druck von etwa 0,4 bis 0,6 bar in den Freezer eintreten. Am Auslaß des Freezers kann die Temperatur des Speiseeis mit Aufschlag -3°C bis -7°C, insbesondere -4°C, betragen.

Ein Ausführungsbeispiel der Erfindung wird nachfolgend unter Bezugnahme auf die Zeichnung näher beschrieben. In der Zeichnung zeigt

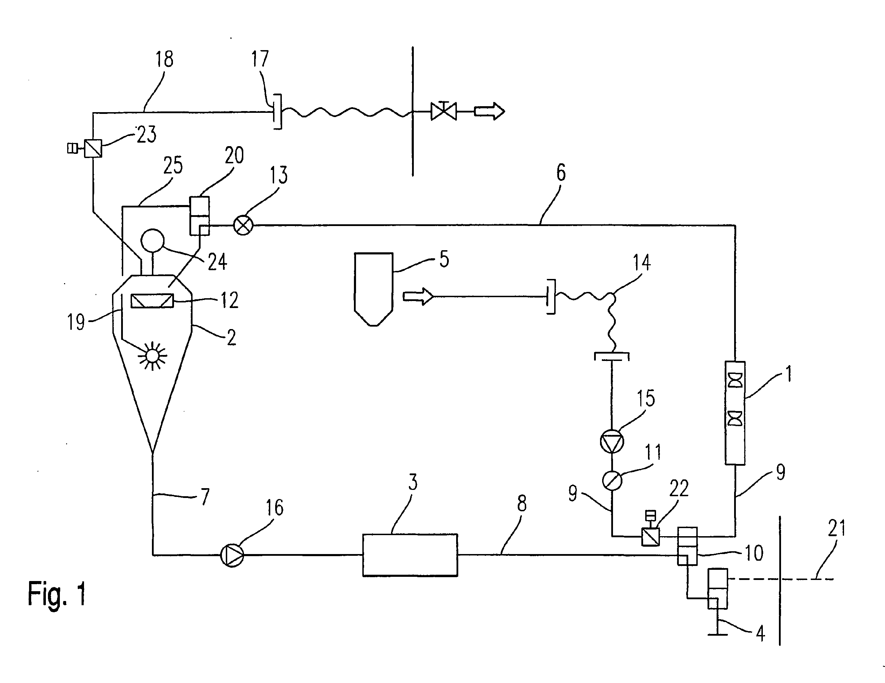

Fig. 1 einen beispielhaften Aufbau der erfindungsgemäßen Vorrichtung.

Von einem Vorratsbehälter 5, der beispielsweise ein Tanklager sein kann, wird der Mix über ein Anschlußelement 14, beispielsweise eine Schlauchverbindung, über die Zuführung 9, beispielsweise eine Rohrleitung, zu einer Aufwärmeinrichtung 1, beispielsweise einen Wärmetauscher, geführt. Von der Aufwärmeinrichtung 1 wird der Mix über die Zuführung 6 über die Entlüftungseinrichtung 2 zu dem Freezer 3 geführt. In dem Freezer 3 wird aus dem Mix unter Kühlung und Lufteinschlag Speiseeis mit Aufschlag hergestellt. Von dem Freezer 3 wird das Speiseeis mit Aufschlag durch die Zuführung 8 zur Ausgabeeinrichtung 4, beispielsweise eine Abfülleinrichtung wie einen Stutzen oder Füller, geführt. Über die Ausgabeeinrichtung 4 wird das Speiseeis mit Aufschlag ausgegeben und kann in Behälter abgefüllt oder weiterverarbeitet werden.

Zwischen Zuleitung 8 und Zuleitung 9 ist ein Verbindungselement 10, beispielsweise ein Dreiwegehahn oder ein Umschaltventil, angeordnet. Bei Produktion von Speiseeis mit Aufschlag ist das Verbindungselement 10, beispielsweise ein Dreiwegehahn oder ein Umschaltventil, so geschaltet, daß das aus dem Freezer 3 geförderte Speiseeis mit Aufschlag zur Ausgabeeinrichtung 4 geführt wird. Bei einer Störung oder Unterbrechung des Produktionsbetriebs wird das Verbindungselement 10 auf Umlauf geschaltet, d.h. die Zuführung 8 wird mit der Zuführung 9 durchgängig verbunden, so daß das aus dem Freezer 3 geförderte Speiseeis mit Aufschlag zu der Aufwärmeinrichtung 1 geführt wird.

Die Förderung von Mix oder Speiseeis mit Aufschlag durch die Zuführungen 6, 7, 8, 9 wird durch Förderpumpen 15, 16 bewirkt. Selbstverständlich können Förderpumpen auch an anderen oder zusätzlichen Stellen in der erfindungsgemäßen Vorrichtung angeordnet sein.

In der Zuführung 9 kann ein Regler 11 angeordnet sein, der beispielsweise den Druck des Mixes in der Zuführung 9 erfassen kann. So kann beispielsweise bei einem Drucksanstieg in der Zuführung 9 der Regler 11 ein Abschalten der Pumpe 15 bewirken und somit einen weiteren Zustrom von Mix in die erfindungsgemäße Vorrichtung verhindern. Ein Druckanstieg in der Zuführung 9 wird bei einem Umschalten des Verbindungselements 10, beispielsweise ein Dreiwegehahn oder ein Umschaltventil, auf Umlaufbetrieb bewirkt. Nach Umschalten auf den Umlauf- bzw. Kreislaufbetrieb wird das Speiseeis mit Aufschlag über die Aufwärmeinrichtung 1, Zuführung 6, Entlüftungseinrichtung 2, Zuführung 7, Freezer 3, Zuführung 8 und die Zuführung 9 geführt. Folglich baut sich bei weiterem Zustrom von Mix aus dem Vorratsbehälter 5 ein Überdruck auf. Dieser Überdruck wird von dem Regler 11 erfaßt und bewirkt ein Abschalten der Förderpumpe 15.

Selbstverständlich kann der Zustrom aus dem Vorratsbehälter 5 auch anders geregelt werden. So kann zum Beispiel zeitgleich mit einem Umschalten des Verbindungselementes 10 auf Umlaufbetrieb ein Abschalten der Förderpumpe 15 bewirkt werden.

Bei Umschalten des Verbindungselementes 10 auf Umlaufbetrieb kann zeitgleich an die Entlüftungseinrichtung 2 ein Unterdruck angelegt werden. Der Unterdruck kann beispielsweise durch eine am Anschluß 17 angeschlossene Unterdruckpumpe (nicht gezeigt) erzeugt werden. Dabei wird über die Zuführung 18 der Unterdruck an die Entlüftungseinrichtung 2 angelegt.

Damit die Entlüftung bzw. Entgasung der Speiseeismasse sehr effizient ist, wird die Speiseeismasse im Entlüfter feinverteilt, um hierdurch eine große Oberfläche bei der Speiseeismasse zu erzeugen. Dies kann beispielsweise bewirkt werden, indem die Speiseeismasse auf einen sich bewegenden Prallkörper 12, beispielsweise einen rotierende Scheibe, gegeben wird. Die rotierende Scheibe wird über einen Antrieb 24, beispielsweise einem Motor, angetrieben. Als vorteilhaft hat es sich dabei erwiesen, wenn die Speiseeismasse dabei schräg von oben auf die rotierende Scheibe gegeben wird.

Weiterhin kann eine Drossel 13 in der Zuführung 6 zu der Entlüftungseinrichtung angeordnet sein, die bei einem Umlaufbetrieb angeschaltet ist. Die Drossel 13 verhindert, daß das Speiseeismaterial aufgrund des Unterdrucks schlagartig in die Entlüftungseinrichtung gezogen wird. Über die Drossel 13 kann eine kontinuierliche Zuführung von Speiseeismasse in die Entlüftungseinrichtung 2 bewirkt werden. An der Entlüftungseinrichtung 2 oder der Zuführung 18 kann weiterhin ein Ventil zur Belüftung vorgesehen sein (nicht gezeigt). Diese Belüftung kann erforderlich sein, wenn das Verbindungselement 10 vom Umlauf wieder auf Produktion gestellt wird.

Zur leichteren Reinigung der Entlüftungseinrichtung 2 kann eine Sprühlanze 19 in der Entlüftungseinrichtung 2 angeordnet sein oder werden. Weiterhin kann ein Umschaltventil 20 vorgesehen sein, über das die Zuführung 6 zu Reinigungszwecken entleert werden kann. Selbstverständlich kann über das Umschaltventil 20 auch eine Probe von Mix bzw. im Umlauf befindlicher Speiseeismasse über einen Auslaß 25 entnommen werden. Eine Reinigung der Ausgabeeinrichtung kann durch ein über die Zuführung 21 zugeführtes Reinigungsmittel vorgesehen sein.

Weiterhin können in der erfindungsgemäßen Vorrichtung Schließelemente 22, 23 vorgesehen sein. Darüber hinaus können selbstverständliche weitere Ventile, Regler, Temperaturfühler, etc. vorgesehen sein, die aus Gründen der Übersichtlichkeit nicht dargestellt sind.

## Patentansprüche

1. Vorrichtung zur Herstellung von Speiseeis mit Aufschlag aus Mix, wobei die Vorrichtung eine Aufwärmeinrichtung (1), eine Entlüftungseinrichtung (2), einen Freezer (3) und eine Ausgabeeinrichtung (4) umfaßt, die über Zuführungen (6, 7, 8) miteinander verbunden sind, wobei ein Mix enthaltender Vorratsbehälter (5) über eine Zuführung (9) mit der Aufwärmeinrichtung (1) verbindbar ist und die zwischen Freezer (3) und Ausgabeeinrichtung (4) angeordnete Zuführung (8) mit der zwischen Vorratsbehälter (5) und Aufwärmeinrichtung (1) angeordneten Zuführung (9) unter Ausbildung eines Kreislaufs verbindbar ist.

2. Vorrichtung nach Anspruch 1,
**dadurch gekennzeichnet,**
**daß** die Aufwärmeinrichtung (1) ein Wärmetauscher, eine Mikrowellenheizung, eine Widerstandsheizung, eine Induktionsheizung und/oder eine Infrarotheizung ist.

3. Vorrichtung nach Anspruch 2,
**dadurch gekennzeichnet,**
**daß** der Wärmetauscher ein Gegenstromwärmetauscher ist

4. Vorrichtung nach Anspruch 3,
**dadurch gekennzeichnet,**
**daß** der Wärmetauscher und der Freezer (3) energetisch miteinander gekoppelt sind.

5. Vorrichtung nach einem der vorherigen Ansprüche,
**dadurch gekennzeichnet,**
**daß** die zwischen Freezer (3) und Ausgabeeinrichtung (4) angeordnete Zuführung (8) mit der zwischen Vorratsbehälter (5) und Aufwärmeinrichtung (1) angeordneten Zuführung (9) über ein Umschaltventil (10) unter Ausbildung eines Kreislaufs verbindbar sind.

6. Vorrichtung nach Anspruch 5,
**dadurch gekennzeichnet,**
**daß** die Ausgabeeinrichtung (4) in der räumlicher Nähe des Umschaltventils (10), bevorzugt unmittelbar am Umschaltventil (10), angeordnet ist.

7. Vorrichtung nach einem der vorherigen Ansprüche,
**dadurch gekennzeichnet,**
**daß** in der Zuführung vom Vorratsbehälter (5) zur Aufwärmeinrichtung (1) ein die Einbringung von Mix in die Vorrichtung regelnder Regler (11) angeordnet ist.

8. Vorrichtung nach Anspruch 7,
**dadurch gekennzeichnet,**
**daß** der Regler (11) ein über den Druck von Mix in der Zuleitung (9) geregeltes Ventil ist.

9. Vorrichtung nach einem der vorherigen Ansprüche,
**dadurch gekennzeichnet,**
**daß** an die Entlüftungseinrichtung (2) ein Unterdruck anlegbar ist.

10. Vorrichtung nach einem der vorherigen Ansprüche,
**dadurch gekennzeichnet,**
**daß** die Entlüftungseinrichtung (2) Mittel (12) zur Verteilung von eingebrachtem Mix aufweist.

11. Vorrichtung nach Anspruch 10,
**dadurch gekennzeichnet,**
**daß** das Mittel (12) zur Verteilung ein sich bewegender Prallkörper ist.

12. Vorrichtung nach Anspruch 11,
**dadurch gekennzeichnet,**
**daß** der Prallkörper eine rotierende Scheibe ist.

13. Vorrichtung nach einem der vorherigen Ansprüche,
**dadurch gekennzeichnet,**
**daß** in der Zuführung (6) zwischen Aufwärmeinrichtung (1) und Entlüftungseinrichtung (2) eine Drossel (13) angeordnet ist.

14. Verfahren zur Herstellung von Speiseeis mit Aufschlag aus Mix,
wobei der Mix
(a) von einem Vorratsbehälter (5) einer Aufwärmeinrichtung (1) zugeführt wird,
(b) von der Aufwärmeinrichtung (1) einer Entlüftungseinrichtung (2) zugeführt wird,
(c) von der Entlüftungseinrichtung (2) einem Freezer (3) zugeführt wird,
(d) in dem Freezer (3) unter Kühlung und Lufteintrag in den Mix aufgeschlagen wird,
(e) das im Schritt (d) hergestellte Speiseeis mit Aufschlag einer Ausgabeeinrichtung (4) zugeführt wird,
wobei im Falle einer Störung oder Unterbrechung des Herstellungsverfahrens,
(f) die Zuführung von Mix aus dem Vorratsbehälter (5) im Schritt (a) und die Ausgabe von Speiseeis mit Aufschlag über die Ausgabeeinrichtung (4) gestoppt wird,
(g) das im Schritt (d) hergestellte Speiseeis mit Aufschlag der Aufwärmeinrichtung (1) zugeführt wird,
(h) in der Aufwärmeinrichtung (1) erwärmt wird, wobei eine erwärmte Speiseeismasse erzeugt wird,
(i) die im Schritt (h) erzeugte Speiseeismasse der Entlüftungseinrichtung (2) zugeführt wird,
(j) die Speiseeismasse in der Entlüftungseinrichtung (2) entlüftet wird,
(k) die entlüftete Speiseeismasse dem Freezer (3) zugeführt wird,
(l) in dem Freezer (3) unter Kühlung und Lufteintrag aufgeschlagen wird,
wobei das Speiseeis mit Aufschlag solange in den Schritten (f) bis (l) im Kreislauf geführt wird, bis die Störung oder Unterbrechung des Herstellungsverfahrens beendet ist.

15. Verfahren nach Anspruch 14,
**dadurch gekennzeichnet,**
**daß** die Aufwärmeinrichtung (1) ein Wärmetauscher, eine Mikrowellenheizung, eine Widerstandsheizung, eine Induktionsheizung und/oder eine Infrarotheizung ist.

16. Verfahren nach Anspruch 15,
**dadurch gekennzeichnet,**
**daß** der Wärmetauscher ein Gegenstromwärmetauscher ist

17. Verfahren nach Anspruch 16,
**dadurch gekennzeichnet,**
**daß** der Wärmetauscher und der Freezer (3) energetisch miteinander gekoppelt sind.

18. Verfahren nach einem der Ansprüche 14 bis 17,
**dadurch gekennzeichnet,**
**daß** das Speiseeis mit Aufschlag im Schritt (h) auf eine Temperatur von etwa +1°C bis etwa + 10°C, bevorzugt auf etwa +3°C bis etwa +5°C, erwärmt wird.

19. Verfahren nach einem der Ansprüche 14 bis 18,
**dadurch gekennzeichnet,**
**daß** das Speiseeis mit Aufschlag im Schritt (j) unter Anlegung eines Unterdrucks in der Entlüftungseinrichtung (2) entlüftet wird, bis der Aufschlag weniger als etwa 20 %, bevorzugt weniger als etwa 10 % beträgt.

20. Verfahren nach Anspruch 19,
**dadurch gekennzeichnet,**
**daß** der Unterdruck etwa 10 mbar bis etwa 500 mbar, bevorzugt etwa 100 mbar bis etwa 300 mbar, beträgt.

21. Verfahren nach einem der Ansprüche 14 bis 20,
**dadurch gekennzeichnet,**
**daß** das Speiseeis mit Aufschlag im Schritt (j) beim Einbringen in die Entlüftungsanlage (2) verteilt, bevorzugt feinverteilt, wird.

22. Verfahren nach einem der Ansprüche 14 bis 21,
**dadurch gekennzeichnet,**
**daß** das Speiseeis beim Kühlen und Eintragen von Luft im Schritt (d) bzw. (1) auf eine Temperatur von etwa -1°C bis etwa -8°C, bevorzugt etwa -3°C bis etwa -6°C abgekühlt wird.

## Claims

1. Apparatus for producing whipped ice cream from a mix, the apparatus comprising a heating device (1), a deaerator device (2), a freezer (3) and an output device (4) which are connected to one another via supply lines (6, 7, 8), a reservoir (5) containing a mix being connectable via a supply line (9) to the heating device (1), and the supply line (8) arranged between freezer (3) and output device (4) being connectable to the supply line (9) arranged between reservoir (5) and heating device (1), so that a circuit is formed.

2. Apparatus according to claim 1, **characterised in that** the heating device (1) is a heat exchanger, a microwave heater, a resistance heater, an induction heater and/or an infrared heater.

3. Apparatus according to claim 2, **characterised in that** the heat exchanger is a counterflow heat exchanger.

4. Apparatus according to claim 3, **characterised in that** the heat exchanger and the freezer (3) are coupled energetically to one another.

5. Apparatus according to any one of the preceding claims, **characterised in that** the supply line (8) arranged between freezer (3) and output device (4) and the supply line (9) arranged between reservoir (5) and heating device (1) are connectable via a reversing valve (10) to form a circuit.

6. Apparatus according to claim 5, **characterised in that** the output device (4) is arranged in spatial proximity to the reversing valve (10), preferably directly on the reversing valve (10).

7. Apparatus according to any one of the preceding claims, **characterised in that** a control means (11) for regulating the introduction of mix into the apparatus is arranged in the supply line from the reservoir (5) to the heating device (1).

8. Apparatus according to claim 7, **characterised in that** the control means (11) is a valve controlled via the pressure of mix in the supply line (9).

9. Apparatus according to any one of the preceding claims, **characterised in that** a partial vacuum can be applied to the deaerator device (2).

10. Apparatus according to any one of the preceding claims, **characterised in that** the deaerator device (2) includes means (12) for distributing mix which has been introduced therein.

11. Apparatus according to claim 10, **characterised in that** the distribution means (12) is a moving rebound body.

12. Apparatus according to claim 11, **characterised in that** the rebound body is a rotating disc.

13. Apparatus according to any one of the preceding claims, **characterised in that** a throttle (13) is arranged in the supply line (6) between heating device (1) and deaerator device (2).

14. Method for producing whipped ice cream from a mix, wherein the mix
(a) is supplied from a reservoir (5) to a heating device (1),
(b) is supplied from the heating device (1) to a deaerator device (2),
(c) is supplied from the deaerator device (2) to a freezer (3),
(d) the mix is whipped in the freezer (3) while being refrigerated and air being introduced therein,
(e) the whipped ice cream produced in step (d) is supplied to an output device (4),
and wherein in the event of malfunction or interruption of the production process,
(f) the supply of mix from the reservoir (5) in step (a) and the discharge of whipped ice cream via the output device (4) is stopped,
(g) the whipped ice cream produced in step (d) is supplied to the heating device (1),
(h) is heated in the heating device (1), a heated product mass being produced,
(i) the product mass produced in step (h) is supplied to the deaerator device (2),
(j) the product mass is deaerated in the deaerator device (2),
(k) the deaerated product mass is supplied to the freezer (3),
(l) is whipped in the freezer (3) while being refrigerated and air being introduced therein,
the whipped ice cream being circulated in steps (f) to (1) until the malfunction or interruption of the production process is ended.

15. Method according to claim 14, **characterised in that** the heating device (1) is a heat exchanger, a microwave heater, a resistance heater, an induction heater and/or an infrared heater.

16. Method according to claim 15, **characterised in that** the heat exchanger is a counterflow heat exchanger.

17. Method according to claim 16, **characterised in that** the heat exchanger and the freezer (3) are coupled energetically to one another.

18. Method according to any one of claims 14 to 17, **characterised in that** in step (h) the whipped ice cream is heated to a temperature of approximately +1°C to approximately +10°C, preferably to approximately +3°C to approximately +5°C.

19. Method according to any one of claims 14 to 18, **characterised in that** in step (j) the whipped ice cream is deaerated in the deaerator device (2) while a partial vacuum is applied until the aeration quantity is less than approximately 20%, preferably less than approximately 10%.

20. Method according to claim 19, **characterised in that** the partial vacuum pressure is approximately 10 mbar to approximately 500 mbar, preferably approximately 100 mbar to approximately 300 mbar.

21. Method according to any one of claims 14 to 20, **characterised in that** in step (j) the whipped ice cream is distributed, preferably finely distributed, while being introduced into the deaerator device (2).

22. Method according to any one of claims 14 to 21, **characterised in that** during the refrigeration and introduction of air in step (d) and (1) the ice cream is cooled to a temperature of approximately -1°C to approximately -8°C, preferably approximately -3°C to approximately -6°C.

## Revendications

1. Dispositif de fabrication de crème glacée avec un stabilisateur constitué d'un mélange, le dispositif comportant un dispositif de chauffage (1), un dispositif d'aération (2), un freezer (3) et un dispositif de sortie (4), qui sont reliés entre eux par des amenées (6, 7, 8), un réservoir (5) contenant du mélange pouvant être relié au dispositif de chauffage (1) par l'intermédiaire d'une amenée (9), et l'amenée (8) agencée entre le freezer (3) et le dispositif de sortie (4) pouvant être reliée à l'amenée (9) agencée entre le réservoir (5) et le dispositif de chauffage (1) en formant un circuit fermé.

2. Dispositif selon la revendication 1,
**caractérisé en ce que**
le dispositif de chauffage (1) est un échangeur de chaleur, un chauffage à micro-ondes, un chauffage à résistance, un chauffage à induction et/ou un chauffage à infrarouges.

3. Dispositif selon la revendication 2,
**caractérisé en ce que**
l'échangeur de chaleur est un échangeur de chaleur à contre-courant.

4. Dispositif selon la revendication 3,
**caractérisé en ce que**
l'échangeur de chaleur et le freezer (3) sont couplés entre eux du point de vue énergétique.

5. Dispositif selon l'une des revendications précédentes,
**caractérisé en ce que**
l'amenée (8) agencée entre le freezer (3) et le dispositif de sortie (4) peut être reliée à l'amenée (9) disposée entre le réservoir (5) et le dispositif de chauffage (1) par l'intermédiaire d'une vanne d'inversion (10), en formant un circuit fermé.

6. Dispositif selon la revendication 5,
**caractérisé en ce que**
le dispositif de sortie (4) est agencé dans l'espace à proximité de la vanne d'inversion (10), de préférence à proximité immédiate de la vanne d'inversion (10).

7. Dispositif selon l'une des revendications précédentes,
**caractérisé en ce que**
un régulateur (11) réglant l'introduction de mélange dans le dispositif est agencé dans l'amenée entre le réservoir (5) et le dispositif de chauffage (1).

8. Dispositif selon la revendication 7,
**caractérisé en ce que**
le régulateur (11) est une vanne réglée par l'intermédiaire de la pression du mélange dans l'amenée (9).

9. Dispositif selon l'une des revendications précédentes,
**caractérisé en ce que**
une dépression peut être appliquée au dispositif d'aération (2).

10. Dispositif selon l'une des revendications précédentes,
**caractérisé en ce que**
le dispositif d'aération (2) comporte un moyen (12) pour la répartition de mélange introduit.

11. Dispositif selon la revendication 10,
**caractérisé en ce que**
le moyen (12) pour la répartition est un corps d'impact mobile.

12. Dispositif selon la revendication 11,
**caractérisé en ce que**
le corps d'impact est un disque rotatif.

13. Dispositif selon l'une des revendications précédentes,
**caractérisé en ce que**
un étranglement (13) est agencé dans l'amenée (6) entre le dispositif de chauffage (1) et le dispositif d'aération (2).

14. Procédé de fabrication de crème glacée avec un stabilisateur constitué d'un mélange,
dans lequel le mélange
(a) est amené d'un réservoir (5) à un dispositif de chauffage (1),
(b) est amené du dispositif de chauffage (1) à un dispositif d'aération (2),
(c) est amené du dispositif d'aération (2) à un freezer (3),
(d) est battu dans le freezer (3) par refroidissement et inclusion d'air dans le mélange,
(e) la crème glacée avec stabilisateur fabriquée dans l'étape (d) est amenée à un dispositif de sortie (4),
étant précisé que, dans le cas d'une perturbation ou d'une interruption du procédé de fabrication,
(f) l'amenée de mélange du réservoir (5) dans l'étape (a) et la sortie de crème glacée avec stabilisateur par l'intermédiaire du dispositif de sortie (4) sont stoppées,
(g) la crème glacée avec stabilisateur fabriquée dans l'étape (d) est amenée au dispositif de chauffage (1),
(h) chauffée dans le dispositif de chauffage (1), ce qui conduit à l'obtention d'une masse chauffée de crème glacée,
(i) la masse de crème glacée obtenue dans l'étape (h) est amenée au dispositif d'aération (2),
(j) la masse de crème glacée est aérée dans le dispositif d'aération (2),
(k) la masse de crème glacée aérée est amenée au freezer (3),
(l) battue dans le freezer (3) par refroidissement et inclusion d'air,
la crème glacée avec stabilisateur circulant en circuit fermé pendant les étapes (f) à (l) jusqu'à ce que la perturbation ou l'interruption du procédé de fabrication soit terminée.

15. Procédé selon la revendication 14,
**caractérisé en ce que**
le dispositif de chauffage (1) est un échangeur de chaleur, un chauffage à micro-ondes, un chauffage à résistance, un chauffage à induction et/ou un chauffage à infrarouges.

16. Procédé selon la revendication 15,
**caractérisé en ce que**
l'échangeur de chaleur est un échangeur de chaleur à contre-courant.

17. Procédé selon la revendication 16,
**caractérisé en ce que**
l'échangeur de chaleur et le freezer (3) sont couplés entre eux du point de vue énergétique.

18. Procédé selon l'une des revendications 14 à 17,
**caractérisé en ce que**,
dans l'étape (h), la crème glacée avec stabilisateur est portée à une température de l'ordre de + 1 °C à environ + 10°C, de préférence de l'ordre de + 3 °C à environ + 5°C.

19. Procédé selon l'une des revendications 14 à 18,
**caractérisé en ce que**,
dans l'étape (j), la crème glacée avec stabilisateur est aérée dans le dispositif d'aération (2) par l'application d'une dépression jusqu'à ce que le stabilisateur soit inférieur à environ 20 %, de préférence à environ 10 %.

20. Procédé selon la revendication 19,
**caractérisé en ce que**
la dépression est de l'ordre de 10 mbar à environ 500 mbar, de préférence de l'ordre de 100 mbar à environ 300 mbar.

21. Procédé selon l'une des revendications 14 à 20,
**caractérisé en ce que**,
dans l'étape (j), la crème glacée avec stabilisateur est répartie, de préférence finement répartie, lors de l'introduction dans le dispositif d'aération (2).

22. Procédé selon l'une des revendications 14 à 21,
**caractérisé en ce que**,
lors du refroidissement et de l'inclusion d'air au cours de l'étape (d) ou (1), la crème glacée est refroidie à une température de l'ordre de - 1 °C à environ - 8 °C, de préférence de l'ordre de - 3 °C à environ - 6 °C.
